# EUROPEAN PATENT APPLICATION

(11) **EP 4 489 258 A2**
(43) Date of publication of application: **08.01.2025**
(21) Application number: 24184020.6
(22) Date of filing: 24.06.2024
(51) Int. Cl.: H02J 7/00, H01M 10/42

(54) **BATTERY SYSTEM AND CHARGE/DISCHARGE CONTROL METHOD THEREOF**

(30) Priority: 05.07.2023 KR 20230087379
(71) Applicant: Samsung SDI Co., Ltd., Yongin-si, Gyeonggi-do 17084 (KR)
(72) Inventor: Hong, Sangjin, Yongin-si, Gyeonggi-do 17084 (KR)
(74) Representative: Gulde & Partner

(57) **Abstract**

A battery system (1) including: a plurality of battery modules (10, 10-1, 10-1, 10-2) electrically connected to each other, each of the plurality of battery modules (10, 10-1, 10-1, 10-2) including a memory; and a first controller (121) to: obtain module identification information for each of the plurality of battery modules (10, 10-1, 10-1, 10-2) from the memory of each of the plurality of battery modules (10, 10-1, 10-1, 10-2); receive battery module information including specification information for each of the plurality of battery modules (10, 10-1, 10-1, 10-2) from an external server based on the module identification information; and restrict charge/discharge of the plurality of battery modules (10, 10-1, 10-1, 10-2) according to the battery module information.

## Description

### BACKGROUND

### 1. Field

Aspects of embodiments of the present disclosure relate to a battery system, and a charge/discharge control method thereof.

### 2. Description of the Related Art

A secondary battery differs from a primary battery, which only provides non-reversible conversion of chemicals to electrical energy, in that the secondary battery can be charged and discharged repeatedly. Low-capacity secondary batteries are used as power devices for small electronic devices, such as portable phones, laptop computers, and camcorders. High-capacity secondary batteries are used as power supply devices for energy storage systems (ESS) or uninterruptible power supply (UPS) systems that use medium-sized and large-sized batteries for electric vehicles (EV), hybrid vehicles (HV), or for home or industrial use.

In general, a secondary battery cell includes an electrode assembly including a positive electrode, a negative electrode, and a separator interposed between the positive electrode and the negative electrode, a case for accommodating the electrode assembly, and an electrode terminal electrically connected to the electrode assembly. An electrolyte solution is injected into the case to enable charge/discharge of the battery cell by electrochemical reaction between the positive electrode, the negative electrode, and the electrolyte solution. The shape of the case, such as a cylindrical or a rectangle shape, depends on the intended use of the battery cell.

Battery cells may be connected in series and/or in parallel to form a battery module having high energy density. Additionally, a battery pack may include one or more of these battery modules according to desired specifications.

The above information disclosed in this Background section is for enhancement of understanding of the background of the present disclosure, and therefore, it may contain information that does not constitute prior art.

### SUMMARY

During a process of assembling battery modules, or replacing or repairing the battery modules, battery modules with different specifications (e.g., capacity, active material, internal resistance, charge/discharge voltage curve, and/or the like) from each other may be included in one battery pack/battery rack. Additionally, battery modules containing defective battery cells generated during the manufacturing process are leaked without being recovered and used in a battery pack/battery rack may occur. As such, battery packs/battery racks that mix battery modules with different specifications from each other, or use battery modules containing defective battery cells, may have safety issues during charge/discharge. Accordingly, it may be desirable to restrict charge/discharge of such battery packs/battery racks.

One or more embodiments of the present disclosure are directed to a battery system capable of restricting charge/discharge of the battery system by detecting, in advance, if battery modules of different specifications from each other are mixed in the battery system, or if a battery module containing defective battery cells is included, and a charge/discharge control method of the battery system.

According to one or more embodiments of the present disclosure, a battery system includes: a plurality of battery modules electrically connected to each other, each of the plurality of battery modules including a memory; and a first controller configured to: obtain module identification information for each of the plurality of battery modules from the memory of each of the plurality of battery modules; receive battery module information including specification information for each of the plurality of battery modules from an external server based on the module identification information; and restrict charge/discharge of the plurality of battery modules according to the battery module information.

In an embodiment, the first controller may be further configured to: detect a battery module having different specifications from among the plurality of battery modules based on the battery module information; and block charge/discharge of the plurality of battery modules if the battery module with different specifications is detected.

In an embodiment, the specification information may include at least one of capacity, active material, or charge/discharge characteristics of a corresponding battery module.

In an embodiment, the first controller may be further configured to: obtain state information for each of the plurality of battery modules; and control charge/discharge of the plurality of battery modules based on the state information if all of the plurality of battery modules have the same specifications as each other. The state information may include information about at least one of voltage, temperature, or current of a corresponding battery module.

In an embodiment, the battery module information may further include test result information of a corresponding battery module; and the first controller may be further configured to: detect a battery module containing a defective battery cell from among the plurality of battery modules based on the battery module information; and block charge/discharge of the plurality of battery modules if the battery module containing the defective battery cell is detected.

In an embodiment, the test result information may be obtained during manufacturing of the plurality of battery modules.

In an embodiment, the battery module information may further include usage history information of the corresponding battery module; and the first controller may be further configured to update usage history information of the plurality of battery modules stored in the external server using the module identification information.

In an embodiment, each of the plurality of battery modules may include: the memory for storing the module identification information; and a second controller configured to obtain state information for each of the plurality of battery modules, and transmit the state information or the module identification information to the first controller.

In an embodiment, the memory may be an EEPROM.

According to one or more embodiments of the present disclosure, a charge/discharge control method of a battery system including a plurality of battery modules electrically connected to each other, includes: obtaining module identification information for each of the plurality of battery modules from a memory of each of the plurality of battery modules; receiving battery module information including specification information for each of the plurality of battery modules from an external server using the module identification information; and restricting charge/discharge of the plurality of battery modules according to the battery module information.

In an embodiment, the restricting may include: detecting a battery module with different specifications from among the plurality of battery modules based on the battery module information; and blocking charge/discharge of the plurality of battery modules if the battery module with different specifications is detected.

In an embodiment, the specification information may include at least one of capacity, active material, or charge/discharge characteristics of a corresponding battery module.

In an embodiment, the charge/discharge control method may further include obtaining state information for each of the plurality of battery modules. The restricting may further include controlling charge/discharge of the plurality of battery modules based on the state information if the plurality of battery modules are all determined to be of the same specifications as each other, and the state information may include information about at least one of voltage, temperature, or current of a corresponding battery module.

In an embodiment, the battery module information may further include test result information of a corresponding battery module; and the restricting may include: detecting a battery module containing a defective battery cell from among the plurality of battery modules based on the battery module information; and blocking charge/discharge of the plurality of battery modules if the battery module containing the defective battery cell is detected.

In an embodiment, the test result information may be obtained during manufacturing of the plurality of battery modules.

In an embodiment, the battery module information may further include usage history information of a corresponding battery module; and the charge/discharge control method may further include updating usage history information of the plurality of battery modules stored in the external server using the module identification information.

According to one or more embodiments of the present disclosure, if battery modules of different specifications from each other are mixed in a battery system, or if a battery module containing defective battery cells is included, such situations may be detected, in advance, to restrict the charge/discharge of the battery system, thereby preventing or substantially preventing safety issues from occurring.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The above and other aspects and features of the present disclosure will be more clearly understood from the following detailed description of the illustrative, nonlimiting embodiments with reference to the accompanying drawings.
FIG. 1 schematically illustrates a battery system according to one or more embodiments.
FIG. 2 schematically illustrates a battery module according to one or more embodiments.
FIG. 3 schematically illustrates a charge/discharge control method of a battery system according to one or more embodiments.

### DETAILED DESCRIPTION

Hereinafter, embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, redundant description thereof may not be repeated.

When a certain embodiment may be implemented differently, a specific process order may be different from the described order. For example, two consecutively described processes may be performed at the same or substantially at the same time, or may be performed in an order opposite to the described order.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

It will be understood that when an element or layer is referred to as being "on," "connected to," or "coupled to" another element or layer, it can be directly on, connected to, or coupled to the other element or layer, or one or more intervening elements or layers may be present. Similarly, when a layer, an area, or an element is referred to as being "electrically connected" to another layer, area, or element, it may be directly electrically connected to the other layer, area, or element, and/or may be indirectly electrically connected with one or more intervening layers, areas, or elements (e.g., a switch, a resistor, a capacitor, and/or the like) therebetween. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments and is not intended to be limiting of the present disclosure. As used herein, the singular forms "a" and "an" are intended to include the plural forms as well, unless the context clearly indicates otherwise. It will be further understood that the terms "comprises," "comprising," "includes," "including," "has," "have," and "having," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. For example, the expression "A and/or B" denotes A, B, or A and B. Expressions such as "at least one of," when preceding a list of elements, modify the entire list of elements and do not modify the individual elements of the list. For example, the expression "at least one of a, b, or c," "at least one of a, b, and c," and "at least one selected from the group consisting of a, b, and c" indicates only a, only b, only c, both a and b, both a and c, both b and c, all of a, b, and c, or variations thereof.

As used herein, the term "substantially," "about," and similar terms are used as terms of approximation and not as terms of degree, and are intended to account for the inherent variations in measured or calculated values that would be recognized by those of ordinary skill in the art. Additionally, when the term "substantially" is used in combination with a characteristic that can be expressed using a numerical value, the term "substantially" may refer to a range of +/-5% of the value centered on that numerical value. Further, the use of "may" when describing embodiments of the present disclosure refers to "one or more embodiments of the present disclosure." As used herein, the terms "use," "using," and "used" may be considered synonymous with the terms "utilize," "utilizing," and "utilized," respectively.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

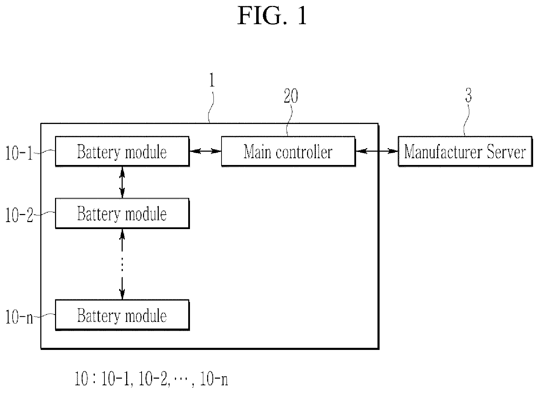

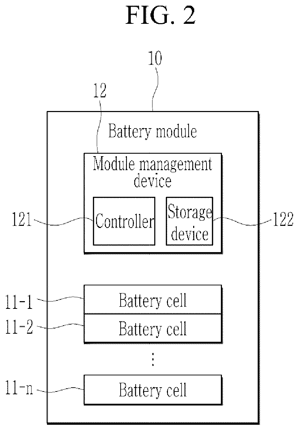

FIG. 1 schematically illustrates a battery system according to one or more embodiments. FIG. 2 schematically illustrates a battery module according to one or more embodiments.

Referring to FIG. 1, a battery system 1 according to an embodiment may include a plurality of battery modules (e.g., a plurality of batteries) 10-1, 10-2, ..., 10-n, and a main controller 20, where n is a natural number greater than 1.

The plurality of battery modules 10-1, 10-2, ..., 10-n may be electrically connected to each other in series and/or in parallel. Referring to FIG. 2, each battery module 10 may include a plurality of battery cells 11-1, 11-2, ..., 11-n, and a module management device 12.

The plurality of battery cells 11-1, 11-2, ..., 11-n may be electrically connected to each other in series and/or in parallel.

The module management device 12 may monitor the state (e.g., cell voltage, temperature, current, and/or the like) of the plurality of battery cells 11-1, 11-2, ..., 11-n, and may transmit state information collected through the monitoring to the main controller 20. The module management device 12 may include a controller 121 and a storage device 122.

The controller 121 may detect the state information of the battery cells 11-1, 11-2, ..., 11-n included in the corresponding battery module 10. The controller 121 may transmit the detected state information to the main controller 20. The controller 121 may also obtain module identification information of the corresponding battery module 10 from the storage device 122, and may transmit the module identification information to the main controller 20. The state information and/or the module identification information of each battery module 10 may be transmitted to the main controller 20 in a daisy chain method.

The storage device 122 may include volatile memory, such as random access memory (RAM). Volatile memory may temporarily store the state information obtained by the controller 121. The storage device 122 may also include non-volatile memory, such as an electrically erasable and programmable read only memory (EEPROM). The non-volatile memory may store the module identification information of the battery module 10. When manufacturing the battery module 10, the manufacturer may store the identification information of the battery module 10 in the non-volatile memory of the storage device 122, and may then ship the battery module 10.

The module management device 12 may be a battery management system (BMS) mounted on each battery module 10. Additionally, the controller 121 may be an analog front end (AFE) included in the BMS.

Referring to FIG. 1, the main controller 20 may communicate with the controller 121 of the battery modules 10-1, 10-2, ..., 10-n and collect the state information from the battery modules 10-1, 10-2, ..., 10-n. The main controller 20 may control the charge/discharge of the battery modules 10-1, 10-2, ..., 10-n based on the state information collected from the battery modules 10-1, 10-2, ..., 10-n.

The main controller 20 may also receive the module identification information of each battery module from the battery modules 10-1, 10-2, ..., 10-n. The main controller 20 may receive battery module information of the battery modules 10-1, 10-2, ... , 10-n configuring the battery system 1 from a manufacturer server 3 based on the received module identification information.

The battery module information may include capacity information of the corresponding battery module. The battery module information may further include information on the capacity of the battery cells configuring the corresponding battery module, active materials (e.g., positive electrode, negative electrode, electrolyte, and/or the like), charge/discharge characteristics (e.g., internal resistance, charge/discharge voltage curve, and/or the like), defect state, and/or the like. The battery module information may further include usage history information (e.g., charge/discharge cycles, cycle-life, defect detection information, position information, and/or the like) of the corresponding battery module. The battery module information may be configured based on specification information (e.g., capacity, active material, charge/discharge characteristics, and/or the like) obtained during the manufacturing of the battery modules 10-1, 10-2, ... , 10-n, test result information (e.g., whether or not defective battery cells were detected), and the like.

In addition, the battery module information may also be configured based on history information (e.g., charge/discharge cycles, cycle-life, defect detection information, position information, and/or the like) obtained from the battery system 1 at (e.g., in or on) which the battery modules 10-1, 10-2, ... , 10-n are mounted.

The main controller 20 may directly transmit the identification information of the battery modules 10-1, 10-2, ... , 10-n to the manufacturer server 3, and may receive the battery module information of the battery modules 10-1, 10-2, ... , 10-n in response thereto. The main controller 20 may transmit the identification information of the battery modules 10-1, 10-2, ..., 10-n to the manufacturer server 3, and may receive the battery module information of the battery modules 10-1, 10-2, ..., 10-n from the manufacturer server 3 through an external device of the battery system 1, or through a device on which the battery system 1 is mounted.

For example, if the battery system 1 is a battery rack configuring an energy storage system (ESS), the main controller 20 may transmit the identification information of the battery modules 10-1, 10-2, ..., 10-n to the manufacturer server 3 through an energy management system (EMS), and may receive the battery module information of the battery modules 10-1, 10-2, ..., 10-n from the manufacturer server 3.

As another example, if the battery system 1 is a battery pack mounted on an electric vehicle, the main controller 20 may transmit the identification information of the battery modules 10-1, 10-2, ..., 10-n to the manufacturer server 3 through an energy management system (EMS), and may receive the battery module information of the battery modules 10-1, 10-2, ..., 10-n from the manufacturer server 3.

The main controller 20 may determine whether the specifications (e.g., charge/discharge characteristics, active materials, and/or the like) of the battery modules 10-1, 10-2, ..., 10-n configuring the battery system 1 are the same or substantially the same as each other based on the battery module information received from the manufacturer server 3. In addition, the main controller 20 may determine whether any of the battery modules 10-1, 10-2, ..., 10-n configuring the battery system 1 include battery cells that are determined to be defective during the manufacturing process or use of the battery module based on the received battery module information.

If it is determined that any of the battery modules 10-1, 10-2, ..., 10-n have different specifications from the other battery modules, or that any of the battery modules contain defective battery cells, the main controller 20 may block the charge/discharge of the battery system 1 to restrict the use of the battery system 1.

If battery modules with different capacities, active materials, charge/discharge characteristics, and/or the like are connected to one another and used, charging/discharging may be possible, but safety issues may occur during the charging/discharging. Therefore, the main controller 20 may check the battery module information of the battery modules 10-1, 10-2, ..., 10-n before starting the charge/discharge of the battery system 1, and may block the charge/discharge if battery modules with different specifications from one another are present. There may often be cases where battery modules containing defective battery cells generated during the manufacturing process are leaked without being recovered, or battery modules containing battery cells determined to be defective during use are distributed without being recovered. If charging/discharging are performed with defective battery cells, a safety problem may occur in the battery system 1. Therefore, the main controller 20 may check the battery module information of the battery modules 10-1, 10-2, ..., 10-n before starting the charge/discharge of the battery system 1, and may block the charge/discharge if battery modules containing defective battery cells are present.

If it is determined that any of the battery modules 10-1, 10-2, ..., 10-n have different specifications from the other battery modules, or that any of the battery modules contain defective battery cells, the main controller 20 may transmit warning information recommending charge prohibition or operation prohibition of the battery system 1 corresponding to a higher-level controller (e.g., an ECU of an electric vehicle).

The main controller 20 may detect a defective battery cell in which a state abnormality, such as an internal short circuit, has occurred based on the state information collected from the battery modules 10-1, 10-2, ..., 10-n. When a defective battery cell is detected, the main controller 20 may transmit the identification information of the battery module in which the defective battery cell was detected, and the detection information of the defective battery cell to the manufacturer server 3, so that the corresponding battery module information of the battery module may be updated. The main controller 20 may transmit charge/discharge cycles, cycle-life, defect detection information, and/or the like obtained during use of the battery modules 10-1, 10-2, ..., 10-n to the manufacturer server 3, along with the module identification information of each of the battery modules 10-1, 10-2, ..., 10-n, so that the usage history information of the battery modules 10-1, 10-2, ..., 10-n stored in the manufacturer server 3 can be updated.

When the battery system 1 is mounted on a device (e.g., an electric vehicle) or the battery system 1 is installed in a desired location (e.g., a predetermined location), the main controller 20 may update the corresponding battery module information by transmitting position information capable of identifying the position of the battery modules 10-1, 10-2, ..., 10-n together with the module identification information of each battery module 10-1, 10-2, ..., 10-n to the manufacturer server 3.

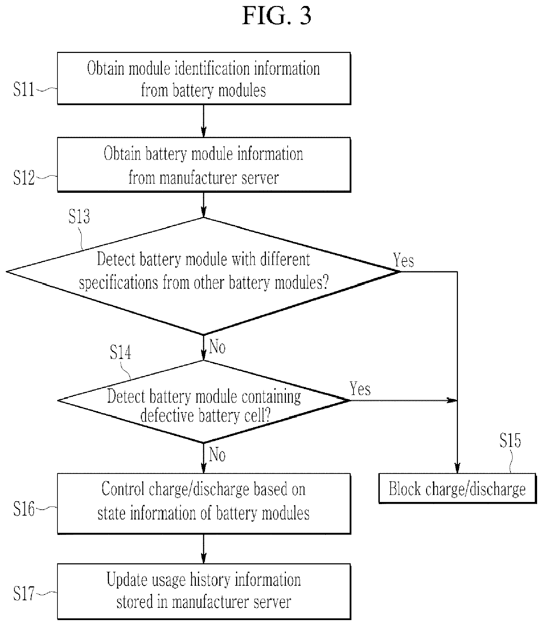

FIG. 3 schematically illustrates a charge/discharge control method of the battery system 1 according to one or more embodiments. The charge/discharge control method of FIG. 3 may be performed by the main controller 20 of the battery system 1 described above with reference to FIGS. 1 and 2.

Referring to FIG. 3, the main controller 20 may obtain the module identification information of each battery module 10 from the battery modules 10 configuring the battery system 1 (S11). The module identification information may be stored in the storage device 122 (e.g., an EEPROM) of the module management device 12 when the battery module 10 is shipped. The main controller 20 may receive the module identification information stored in the storage device 122 from the module management device 12 of each battery module 10.

If the module identification information is obtained from the battery modules 10, the main controller 20 may obtain the battery module information corresponding to each battery module 10 from the manufacturer server 3 based on the module identification information (S12) . In other words, the main controller 20 may directly or indirectly transmit the module identification information obtained from the battery modules 10 to the manufacturer server 3, and may receive the battery module information in response thereto from the manufacturer server 3.

The manufacturer of the battery module 10 may store and manage specification information (e.g., capacity, active material, charge/discharge characteristics, and/or the like), test result information (e.g., whether or not defective battery cells are detected), and/or the like of each battery module 10 obtained during manufacturing of each battery module 10 on the manufacturer server 3. In addition, the manufacturer may continuously collect usage history information of each battery module 10 (e.g., charge/discharge cycles, cycle-life, defect state, device identification information, position information, and/or the like) from the battery system 1 at (e.g., in or on) which the battery modules 10-1, 10-2, ..., 10-n are mounted, and may update the battery module information stored on the manufacturer server 3 based on the information.

The main controller 20 may detect a battery module with different specifications from other battery modules from among the battery modules 10 configuring the battery system 1 based on the battery module information obtained from the manufacturer server 3 (S13). In other words, the main controller 20 may detect the battery modules with different specifications from among the battery modules 10 by comparing the battery module information of the battery modules 10 with each other.

In addition, the main controller 20 may detect a battery module containing a defective battery cell from among the battery modules 10 configuring the battery system 1 based on the battery module information obtained from the manufacturer server 3 (S14). In other words, the main controller 20 may check the battery module information of each battery module 10 to determine whether a defective battery cell is included.

If a battery module with different specifications from other battery modules or a battery module containing defective battery cells is detected from among the battery modules 10 (e.g., YES at S13 or S14), the main controller 20 may block charge/discharge of the battery system 1 to restrict the use of the battery system 1 (S15).

On the other hand, if the specifications of all battery modules 10 configuring the battery system 1 are the same or substantially the same as each other (e.g., NO at S13), and there is no battery module containing a defective battery cell from among the battery modules 10 (e.g., NO at S14), the main controller 20 may control charge/discharge of the battery modules 10 based on the state information collected from the battery modules 10 (S16). In addition, if the charge/discharge of the battery modules 10 progresses, the main controller 20 may use the module identification information of each of the battery modules 10 to update the usage history information of each of the battery modules 10 stored in the manufacturer server 3 (S17).

In other words, when the charge/discharge of the battery modules 10 progresses, the main controller 20 may transmit the charge/discharge cycles together with the module identification information of each battery module 10 to the manufacturer server 3 to update the usage history information of each of the battery modules 10 stored in the manufacturer server 3.

The electronic or electrical devices and/or any other related device or constituent element according to embodiments of the present disclosure described herein (e.g., the main controller, the manufacturer server, the module management device, and/or the like) can be implemented using any suitable hardware, firmware (e.g., an application-specific integrated circuit), software, or a combination of software, firmware, and hardware. For example, the elements of various configurations of the devices can be formed on a single integrated circuit (IC) chip or on separate IC chips. In addition, the elements of various configurations of the devices can be implemented as a flexible printed circuit film, a tape carrier package (TCP), or a printed circuit board (PCB), or may be implemented on a single substrate. The electrical connections or interconnections described in the present specification can be implemented by wire or conductive elements on, for example, a PCB or other suitable kind of circuit carrier. The conductive elements may include metallizations, such as surface metallizations and/or pins, and may include conductive polymers or ceramics. Electrical energy may also be transmitted via wireless connections, for example, using electromagnetic radiation or light.

In addition, the various configurations and elements of the devices may be a process or a thread that runs on at least one processor and at least one computing device to perform the various functions described herein, executes computer program instructions, and interacts with other system constituent elements. The computer program instructions are stored in memory that can be implemented in a computing device using standard memory devices, such as a random access memory (RAM). The computer program instructions may also be stored on other non-transitory computer readable media, such as, for example, a CD-ROM, a flash drive, and the like.

In addition, those having ordinary skill in the art should recognize that the functions of various computing devices may be combined or integrated into a single computing device, or the functions of a specific computing device can be distributed across different computing devices, without departing from the scope of the present disclosure.

The foregoing is illustrative of some embodiments of the present disclosure, and is not to be construed as limiting thereof. Although some embodiments have been described, those skilled in the art will readily appreciate that various modifications are possible in the embodiments without departing from the scope of the present disclosure. It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. Therefore, it is to be understood that the foregoing is illustrative of various example embodiments and is not to be construed as limited to the specific embodiments disclosed herein, and that various modifications to the disclosed embodiments, as well as other example embodiments, are intended to be included within the scope of the present disclosure as defined in the appended claims, and their equivalents.

### Description of symbols

1: battery system
10, 10-1, 10-2, ..., 10-n: Battery module
11-1, 11-2, ... , 11-n: Battery cell
12: Module management device
121: Controller
122: Storage device
20: Main controller
3: Manufacturer Server

## Claims

1. A battery system (1) comprising:
a plurality of battery modules (10, 10-1, 10-1, 10-2) electrically connected to each other, each of the plurality of battery modules (10, 10-1, 10-1, 10-2) comprising a memory; and
a first controller (121) configured to:
obtain module identification information for each of the plurality of battery modules (10, 10-1, 10-1, 10-2) from the memory of each of the plurality of battery modules (10, 10-1, 10-1, 10-2);
receive battery module information including specification information for each of the plurality of battery modules (10, 10-1, 10-1, 10-2) from an external server based on the module identification information; and
restrict charge/discharge of the plurality of battery modules (10, 10-1, 10-1, 10-2) according to the battery module information.

2. The battery system (1) as claimed in claim 1, wherein the first controller (121) is further configured to:
detect a battery module (10, 10-1, 10-1, 10-2) having different specifications from among the plurality of battery modules (10, 10-1, 10-1, 10-2) based on the battery module information; and
block charge/discharge of the plurality of battery modules (10, 10-1, 10-1, 10-2) if the battery module (10, 10-1, 10-1, 10-2) with different specifications is detected.

3. The battery system (1) as claimed in claim 1 or 2, wherein the specification information includes at least one of capacity, active material, or charge/discharge characteristics of a corresponding battery module (10, 10-1, 10-1, 10-2).

4. The battery system (1) as claimed in any one of claims 1 to 3, wherein the first controller (121) is further configured to:
obtain state information for each of the plurality of battery modules (10, 10-1, 10-1, 10-2); and
control charge/discharge of the plurality of battery modules (10, 10-1, 10-1, 10-2) based on the state information if all of the plurality of battery modules (10, 10-1, 10-1, 10-2) have the same specifications as each other, and
wherein the state information includes information about at least one of voltage, temperature, or current of a corresponding battery module (10, 10-1, 10-1, 10-2).

5. The battery system (1) as claimed in any one of the preceding claims, wherein:
the battery module information further includes test result information of a corresponding battery module (10, 10-1, 10-1, 10-2); and
the first controller (121) is further configured to:
detect a battery module (10, 10-1, 10-1, 10-2) containing a defective battery cell (11-1, 11-2) from among the plurality of battery modules (10, 10-1, 10-1, 10-2) based on the battery module information; and
block charge/discharge of the plurality of battery modules (10, 10-1, 10-1, 10-2) if the battery module (10, 10-1, 10-1, 10-2) containing the defective battery cell (11-1, 11-2) is detected.

6. The battery system (1) as claimed in claim 5, wherein the test result information is obtained during manufacturing of the plurality of battery modules (10, 10-1, 10-1, 10-2).

7. The battery system (1) as claimed in any one of the preceding claims, wherein:
the battery module information further includes usage history information of the corresponding battery module (10, 10-1, 10-1, 10-2); and
the first controller (121) is further configured to update usage history information of the plurality of battery modules (10, 10-1, 10-1, 10-2) stored in the external server using the module identification information.

8. The battery system (1) as claimed in any one of the preceding claims, wherein each of the plurality of battery modules (10, 10-1, 10-1, 10-2) comprises:
the memory for storing the module identification information; and
a second controller configured to obtain state information for each of the plurality of battery modules (10, 10-1, 10-1, 10-2), and transmit the state information or the module identification information to the first controller (121).

9. A charge/discharge control method of a battery system (1) comprising a plurality of battery modules (10, 10-1, 10-1, 10-2) electrically connected to each other, the charge/discharge control method comprising:
obtaining module identification information for each of the plurality of battery modules (10, 10-1, 10-1, 10-2) from a memory of each of the plurality of battery modules (10, 10-1, 10-1, 10-2);
receiving battery module information including specification information for each of the plurality of battery modules (10, 10-1, 10-1, 10-2) from an external server using the module identification information; and
restricting charge/discharge of the plurality of battery modules (10, 10-1, 10-1, 10-2) according to the battery module information.

10. The charge/discharge control method as claimed in claim 9, wherein the restricting comprises:
detecting a battery module (10, 10-1, 10-1, 10-2) with different specifications from among the plurality of battery modules (10, 10-1, 10-1, 10-2) based on the battery module information; and
blocking charge/discharge of the plurality of battery modules (10, 10-1, 10-1, 10-2) if the battery module (10, 10-1, 10-1, 10-2) with different specifications is detected.

11. The charge/discharge control method as claimed in claim 9 or 10, wherein the specification information includes at least one of capacity, active material, or charge/discharge characteristics of a corresponding battery module (10, 10-1, 10-1, 10-2).

12. The charge/discharge control method as claimed in any one of claims 9 to 11, further comprising obtaining state information for each of the plurality of battery modules (10, 10-1, 10-1, 10-2),
wherein the restricting further comprises controlling charge/discharge of the plurality of battery modules (10, 10-1, 10-1, 10-2) based on the state information if the plurality of battery modules (10, 10-1, 10-1, 10-2) are all determined to be of the same specifications as each other, and
wherein the state information includes information about at least one of voltage, temperature, or current of a corresponding battery module (10, 10-1, 10-1, 10-2).

13. The charge/discharge control method as claimed in any one of claims 10 to 12, wherein:
the battery module information further includes test result information of a corresponding battery module (10, 10-1, 10-1, 10-2); and
the restricting comprises:
detecting a battery module (10, 10-1, 10-1, 10-2) containing a defective battery cell (11-1, 11-2)from among the plurality of battery modules (10, 10-1, 10-1, 10-2) based on the battery module information; and
blocking charge/discharge of the plurality of battery modules (10, 10-1, 10-1, 10-2) if the battery module (10, 10-1, 10-1, 10-2) containing the defective battery cell (11-1, 11-2) is detected.

14. The charge/discharge control method as claimed in claim 13, wherein the test result information is obtained during manufacturing of the plurality of battery modules (10, 10-1, 10-1, 10-2).

15. The charge/discharge control method as claimed in any one of claims 10 to 14, wherein:
the battery module information further includes usage history information of a corresponding battery module (10, 10-1, 10-1, 10-2); and
the charge/discharge control method further comprises updating usage history information of the plurality of battery modules (10, 10-1, 10-1, 10-2) stored in the external server using the module identification information.
